(19) Europäisches Patentamt
European Patent Office
Office européen des brevets

(11) Publication number: 0 040 935
B1

(12) **EUROPEAN PATENT SPECIFICATION**

(45) Date of publication of patent specification: **24.07.85**

(51) Int. Cl.[4]: **B 01 J 20/18,** B 01 D 53/02

(21) Application number: **81302162.3**

(22) Date of filing: **15.05.81**

(54) **Oxygen adsorbent and process for the separation of oxygen and nitrogen using same.**

(30) Priority: **23.05.80 JP 67772/80**
**02.06.80 JP 72701/80**

(43) Date of publication of application:
**02.12.81 Bulletin 81/48**

(45) Publication of the grant of the patent:
**24.07.85 Bulletin 85/30**

(84) Designated Contracting States:
**BE DE FR GB LU NL**

(56) References cited:
**FR-A-2 253 709**
**US-A-2 810 454**
**US-A-3 013 982**
**US-A-3 013 990**

**IZVESTIYA AKADEMII NAUK SSSR, SERIYA KHIMICHESKAYA, no. 9, 1973, Institute of Physical Chemistry, Academy of Sciences of the USSR, I.A. KALINNIKOVA et al.: "Equilibrium adsorption of mixtures of nitrogen with oxygen on NaA zeolite", pages 1940-1946**

(73) Proprietor: **MITSUBISHI JUKOGYO KABUSHIKI KAISHA**
**5-1, Marunouchi 2-chome Chiyoda-ku**
**Tokyo (JP)**

(72) Inventor: **Izumi, Jun c/o Nagasaki Technical Institute**
**Mitsubishi Jukogyo K. K. 1-1 Akunoura-machi**
**Nagasaki City Nagasaki Pref (JP)**
Inventor: **Tsutaya, Hiroyuki c/o Nagasaki Technical Institute**
**Mitsubishi Jukogyo K. K. 1-1 Akunoura-machi**
**Nagasaki City Nagasaki Pref. (JP)**
Inventor: **Amitani, Tatsuo Nagasaki Shipyard & Engine Works**
**Mitsubishi Jukogyo K. K. 1-1 Akunoura-machi**
**Nagasaki City Nagasaki Pref. (JP)**
Inventor: **Kubo, Masayoshi Nagasaki Shipyard & Engine Works**
**Mitsubishi Jukogyo K. K. 1-1 Akunoura-machi**
**Nagasaki City Nagasaki Pref. (JP)**
Inventor: **Maehara, Kenicki Nagasaki Shipyard & Engine Works**
**Mitsubishi Jukogyo K. K. 1-1 Akunoura-machi**
**Nagasaki City Nagasaki Pref. (JP)**

(74) Representative: **Sommerville, John Henry et al**
**SOMMERVILLE & RUSHTON 11 Holywell Hill**
**St. Albans Hertfordshire, AL1 1EZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 040 935 B1

Courier Press, Leamington Spa, England.

## Description

Background of the invention

1. Field of the invention

This invention relates to oxygen-selective adsorbents for the separation, removal or concentration of oxygen in the air and process for the separation of oxygen and nitrogen using it.

2. Description of the prior art

An important feature of the separation, removal or concentration of oxygen from the air is that usually, there is no cost incurred for the starting material since the air is used as a starting material and the price of the oxygen depends upon the following factors:

(a) Costs of the equipment necessary for separating or concentrating oxygen,

(b) Costs for supplying various power necessary for operating the apparatus,

(c) In the case where separated oxygen is needed, the price of and supplementary costs for it, and the like.

Another characteristic is that separation or concentration of oxygen can be achieved either by separating oxygen or by separating nitrogen from the air used as starting material.

Taking into consideration the above-described factors, various economically advantageous processes have been proposed. A representative example is a process in which a deep cooling separation apparatus is used which is designed to cool the air to extremely low temperatures to separate oxygen or nitrogen making use of the different in the boiling points of oxygen and nitrogen. This apparatus is suitable for producing a large amount of oxygen and production of much oxygen and nitrogen depends upon the deep cooling separation apparatus. However, this prior art is disadvantageous in that a large amount of power and large-scale equipment are needed for operating the process.

Another prior art separation process is a process which uses aluminasilicate based high molecular adsorbents recently developed by Union Carbide Corporation and put to practical use. Among these adsorbents, those called molecular sieves "5A" and "13X" (tradenames for products of Union Carbide Corporation) have a very high adsorptivity (1.2 g $N_2$/100 g at NTP) to nitrogen and therefore, a process for the separation or concentration of oxygen by removing nitrogen selectively from the air using these adsorbents has been put to practical use. However, the molecular sieves of the types of "5A" and "13X" have an adsorptivity which follows the Langmuir adsorption isotherm and when the pressure reaches 1.5 ata the increase in adsorptivity is not large as compared with the increase in the pressure, and a very large amount of nitrogen is needed since molar ration of $N_2/O_2$ of the air is 4. Therefore, scale merit accompanying enlargement of the apparatus is rather small, which will limit the application of this prior art process to small volume installments.

Further, a process which uses a transition metal-based organic complex capable of selectively absorbing oxygen could be considered useful. For example, a cyclic cobalt complex called "salcomine" can absorb 1 mol of oxygen per 2 mols of salcomine. This absorption by salcomine is reversible with changes in temperature and pressure so that it is theoretically possible to achieve separation or concentration of oxygen by means of a temperature increase-temperature decrease cycle or a pressure increase-pressure decrease cycle of the air. However, in practice, severe deterioration of the organic complex occurs as absorption and liberation of oxygen are repeated and the organic complex itself is expensive. Therefore, its application will practically be limited to use as a special carrier.

In addition to the above, there are some measures which have not been put to practical use but are considered to be promising in principle, for example, filters capable of selectively permeating oxygen, oxygen pump using zirconium oxide.

As stated above, the separation removal or concentration of oxygen can generally be classified into two groups in practice. That is, on one hand, for a small volume oxygen production process, a pressure swing process is used in which nitrogen is removed from the air using molecular sieves, and on the other hand, for a large volume oxygen production process, a deep cooling separation process is used in which the air is cooled to an extremely low temperature. However, for each process, efforts to decrease costs for power and equipment seem to have almost reached their limits already.

US—A—3 013 990 describes, as a catalyst, a zeolite molecular sieve, such as an Na-A type zeolite, containing iron oxide incorporated by contacting the zeolite with a solution of an iron salt, particularly iron nitrate, reducing the incorporated iron to the element metal, and thereafter oxidising the metal to the oxide. However no purification of the zeolite is mentioned nor is the use of the iron-containing zeolite for the selective adsorption of oxygen at a low temperature. Further the desirable content of iron in the catalyst is taught to be the maximum.

Summary of the invention

Therefore, the first object of this invention is to offset defects of the above-described contentional processes for producing oxygen and provide an adsorbent capable of adsorbing oxygen preferentially, thereby decreasing costs incurred for the production of oxygen and decreasing the scale of the equipment used in the process. We have found an oxygen adsorbent for adsorbing oxygen from a mixed gas consisting substantially of oxygen and nitrogen which comprises a substantially pure Na-A type zeolite having dissolved therein at least 0.5% by weight of iron, having a

valency state of at least 2. We have also found a process for the separation of oxygen and nitrogen from a two-component mixed gas using this adsorbent.

We also provide a preferred oxygen adsorbent for adsorbing oxygen from a mixed gas consisting substantially of oxygen and nitrogen which comprises an adsorbent obtained by substituting a portion of Na of the above adsorbent with K, and a process for the separation of oxygen and nitrogen from a mixed gas using this preferred adsorbent.

By "substantially pure" we mean that the adsorbent contains no more than 0.1% by weight of other impurities.

## Brief description of the drawings

Other object and features of this invention will be apparent from the following description with reference to the accompanying drawings in which

Fig. 1 shows a flow chart of a testing apparatus used for confirming the effect of this invention;

Figs. 2, 3 and 4 are graphs showing amounts of dynamic adsorption at normal temperature (25°C), 0°C and −30°C, respectively, by a substantially pure Na-A type zeolite, and iron-dissolved Na-A type zeolites having dissolved therein 0.5 wt % and 1 wt %, respectively, of Fe:

Fig. 5 shows a flow chart of a preferred embodiment of this invention;

Fig. 6 is a graph showing the amounts of dynamic adsorption at 25°C by a substantially pure Na-A type zeolite and Na-A type zeolites with 10% and 20%, respectively, of Na being substituted by K;

Fig. 7 is a graph showing the amounts of dynamic adsorption at 25°C by substantially pure Na-A type zeolite having dissolved therein 1 wt % of Fe, Na-K-A type zeolite having dissolved therein 1 wt % of Fe with 10% of Na being substituted by K and Na-K-A type zeolite having dissolved therein 1 wt % of Fe with 20% of Na being substituted by K; and

Fig. 8 is a graph showing the amounts of dynamic adsorption at 25°C, 0°C and −25°C, respectively, by the Na-K-A type zeolite having dissolved therein 1 wt % of Fe with 10% of Na being substituted by K.

## Description of preferred embodiment

As a result of extensive research we have now found that among the above-described molecular sieves, Na-A type zeolite does not adsorb oxygen selectively at room temperature when it is charged in an adsorbing column and the air is passed therethrough at high pressures but behaves, like the above-described molecular sieves "5A" and "13X", as a nitrogen-selective adsorbent, while Na-A type zeolite having dissolved therein Fe, obtainable by constacting Na-A type zeolite with iron having a valency of at least 2 in a wet condition and then heating the zeolite at a temperature of about 450°C to dissolve Fe in the crystal of the Na-A type zeolite, shows an increased selectivity to oxygen and also an increased amount of oxygen adsorbed in a single component system.

Further, in addition to the finding that pure Na-A type zeolite essentially shows an increased selectivity to oxygen in a two-component system consisting substantially of oxygen and nitrogen according as the temperature decreases, it is found that the Na-A type zeolite having Fe dissolved therein has an excellent oxygen selectivity as compared with pure Na-A type zeolite in higher temperature regions which are nevertheless below room temperature.

As far as is known, such behavior of the Na-A type zeolite having Fe dissolved therein in the selective oxygen adsorption has not hitherto been elucidated in the study of adsorption of oxygen and nitrogen.

The above-described Fe-dissolved Na-A type zeolite which can be used in this invention was prepared by the following process.

At first, Na-A type zeolite powders produced by Union Carbide Corporation were washed with water sufficiently. After boiling the powders in an aqueous NaCl solution at 100°C for 1 hour they were washed with water again to obtain a starting material which is to be used in further steps. This is because usually the Na-A type zeolite powders contain impurities such as about 0.1 wt % of K, about 0.05 wt % of Ca, about 0.05 wt % of Mg, etc. and can be purified by the above treatment to such an extent that the amount of total impurities is 0.1 wt % or less. From the thus-purified powders 50 g was divided and added into 1 l of deionized water and stirred to form a slurry with bubbling $N_2$ gas to remove dissolved oxygen, thereby preventing oxidation of Fe ions. Then, an aqueous $FeCl_3$ solution was added to the slurry dropwise and stirring was continued for another hour. Since the pH of the aqueous slurry is about 8.5 to 9 $FeCl_3$ is presumed to be in the form of $Fe(OH)_3$ colloid most portion of which is adhered onto the Na-A type zeolite.

After dehydrating, the slurry thus obtained was charged in an adsorbing column as illustrated in Fig. 1 and oxygen adsorptivity from the air was confirmed. In this experiment, two kinds of Fe-added slurries, one containing 0.5 wt % and another containing 1 wt % (in terms of $Fe_2O_3$) of $FeCl_3$, were prepared by adjusting the amount of $FeCl_3$ added dropwise.

Then, after removing water from the Fe-adhered Na-A type zeolite in the adsorbing column using a vacuum filter and pre-drying at 100°C in an air bath, the zeolite was heated in a vacuum heating bath under the conditions of 13,3 $N/m^2$ (0.1 Torr) and 450°C for 1 hour to dissolve Fe in the Na-A type zeolite. Quality control of the amount of Fe dissolved in the Na-A type zeolite is made by means of ESR and distribution of Fe concentration on the cross-section of crystals.

When the dissolution of Fe in the Na-A type zeolite $FeCl_2$, $Fe(CH_3CO_2)_2$, $Fe(NO_3)_2$, $Fe(NO_3)_3$, etc. were also used in addition to $FeCl_3$ mentioned above, no difference in the final adsorptivity has been observed. This is presumably because after

dropwise addition thereof, these compounds form $Fe(OH)_2$ or $Fe(OH)_3$ which finally combines with the Na-A type zeolite upon dehydration to form bondings such as

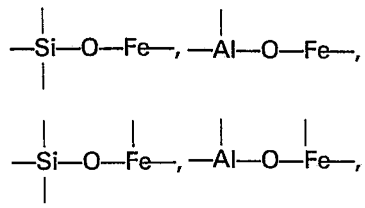

etc.

Hereinafter, the air separation capability of Fe-dissolved Na-A type zeolite will be explained in greater detail with reference to the drawings.

Fig. 1 is a schematic illustration of an apparatus designed to measure the air separation capability of the Na-A type zeolite. Reference numeral 1 is a high pressure air cylinder. The high pressure air discharged from the cylinder is supplied, via a decompressor 2, to a valve 3. A Bourdon's tube barometer is arranged between the decompressor 2 and the valve 3 to enable measurement of the pressure. In this experiment the inlet pressure was adjusted to 5.06 bar (5 ata) by means of the decompressor 2 and the Bourdon's tube barometer 4. A stainless steel adsorbing column 6 having an inner diameter of 10 mm and a length of 300 ml was charged with the Na-A type zeolite 7 immediately after washing with water, which did not show any adsorptivity at all. For this reason, the adsorbing column 6 was arranged in a temperature controlling bath 8 capable of temperature adjustment over the range of from −70°C to 600°C. In order to pretreat the adsorbent the valve 3 and a valve 5 were closed, a valve 9 was opened, the pressure in the adsorbing column was reduced to 13.3 N/m$^2$ (0.1 Torr) using a vacuum pump 10, the temperature controlling bath 8 was adjusted to 450°C and dehydration treatment was carried out for 1 hour. Then, after the bath was cooled again to room temperature the valves 3, 5 were opened again to pass the high pressure air which was fed *in toto*, via a float type flow meter 11, to an oxygen densitometer 12 to measure the outlet $O_2$ concentration. The data thus-obtained were recorded with an automatic recording meter 13.

Using testing apparatus as illustrated in Fig. 1 the adsorbing column 6 was charged with (1) Fe-non-dissolved Na-A type zeolite powders, (2) 0.5 wt % Fe-dissolved Na-A type zeolite powders or (3) 1 wt % Fe-dissolved Na-A type zeolite powders, each in an amount of 15 g and the inlet gas flow rate was set up to 100 N ml/min., and the inlet air pressure to 5.06 bar (5 ata) to measure change in the outlet oxygen concentration with the lapse of time. An example of change in the outlet $O_2$ concentration with the lapse of time at room temperature is shown in Fig. 2.

In Fig. 2, the horizontal axis X indicates time with its scale being calibrated in minute, while the vertical axis Y represents oxygen concentration in volume %. In order to indicate the inlet oxygen concentration a standard line α is drawn at an oxygen concentration of 20.8%.

Further, in Fig. 2, curves representing changes in the outlet oxygen concentrations with the lapse of time are expressed by a solid line in the case of (1) Fe-non-dissolved Na-A type zeolite powders, by a broken line in the case of (2) 0.5% Fe-dissolved Na-A type synthetic zeolite, and by a dotted broken line in the case of (3) 1 wt % Fe-dissolved Na-A type synthetic zeolite powders.

In Fig. 2, the data on change in the outlet oxygen concentration with the lapse of time of Fe-non-dissolved Na-A type zeolite will be explained first of all. With this sample, the outlet oxygen concentration decreases initially from 20.8% to 18%, then increases rapidly to 46% followed by decreasing gradually till the break through of the adsorbent which occurred about 5 minutes after the outset of passing the air.

As will be clear from the above data, the amount of oxygen adsorbed per unit time is larger than the amount of nitrogen adsorbed per unit time in the initial stage of adsorption and as a result the outlet oxygen concentration decreases. However, with lapse of time, the amount of nitrogen adsorbed per unit time exceeds that of oxygen adsorbed per unit time and the outlet oxygen concentrations increases. Thereafter, the adsorbent becomes saturated with oxygen and nitrogen and therefore the outlet oxygen concentration comes to decrease gradually and reaches finally the inlet gas concentration.

On the other hand, the amount of oxygen or nitrogen adsorbed by Na-A type zeolite in a single component system of oxygen or nitrogen is 2.2 ml of oxygen or 6.2 ml of nitrogen per g of the adsorbent under the conditions of 20°C and 1.01 bar (1 ata) as described in Kitagawa and Suzuki: "Fundamentals and Design of Adsorption" page 226.

Putting these facts together, it is presumed that the above-described phenomena occur since the speed of diffusion of oxygen onto the adsorbent is larger than that of nitrogen although the amount of nitrogen is 3 times as large as that of oxygen adsorbed and therefore the outlet oxygen concentration is naturally expected to be higher.

However, as will be clear from the above-described separability of oxygen and nitrogen from the air, oxygen-selective adsorptivity is too weak for it to be used for practical purposes from economical viewpoint.

As a result of further research, we found that when Fe is dissolved in the Na-A type zeolite by the above-described preparation method the resulting zeolite exhibits new properties that have not been described in the literature. That is, although Fe-non-dissolved Na-A type zeolite exhibits only a low oxygen selectivity as described above both the minimum and maximum values of the outlet oxygen concentration decrease by dissolving Fe in the Na-A type zeolite according as the amount of Fe dissolved increases. From this it follows that the

adsorption rate of nitrogen decreases as compared with that of oxygen and thus very high oxygen selectivity can be obtained under dynamic conditions as in adsorbing columns.

Hereinafter, efficiency of this invention will consecutively be explained with reference to Fig. 2.

With the 0.5 wt % Fe-dissolved Na-A type zeolite the minimum value and maximum value of the outlet oxygen concentration are 14% and 30%, respectively, and with the 1 wt % Fe-dissolved Na-A type zeolite these values are 6% and 24%, respectively.

As will be apparent from the above properties the adsorption rate of nitrogen is remarkably reduced as compared with that of oxygen by the dissolution of Fe in the Na-A type zeolite.

Further, upon determination of the amount of oxygen adsorbed by isothermal adsorption in a single component system, the results obtained under conditions of 25°C and 1.01 bar (1 ata) are 2.2 ml/g in the case where no Fe is dissolved, 3 ml/g in the case where 0.5 wt % of Fe is dissolved, and 3.8 ml/g in the case where 1 wt % Fe is dissolved, thus increasing in this order. From this it can be seen that not only increase in the oxygen adsorption rate but also increase in the amount of oxygen adsorbed will contribute to decrease in the minimum value of the outlet oxygen concentration with increased amount of Fe which is dissolved in the zeolite.

Further, oxygen adsorption from the air using the above-described adsorbents (1) to (3) after having been cooled to a temperature below room temperature has led to finding of a new phenomenon which is different from that observed at room temperature.

Figs. 3 and 4 indicate data on changes in the outlet oxygen concentrations with the lapse of time at 0°C and −30°C, respectively.

As shown in Fig. 3, any one of the adsorbents (1) to (3) shows a decreased minimum value of the outlet oxygen concentration at 0°C. Particularly, it is 1.5 vol % with the 0.5 wt % Fe-dissolved zeolite and almost no oxygen can be detected at the outlet. In addition, the maximum value of the outlet oxygen concentration with any of (1) to (3) decreased. Particularly, no adsorption of nitrogen occurs with the 1 wt % Fe dissolved zeolite.

Further, as shown in Fig. 4, the Fe-non-dissolved Na-A type zeolite is lowest in its minimum value of the outlet oxygen concentration (1.5 vol %) at −30°C and the minimum value of the outlet oxygen concentration increases with increased amount of Fe dissolved. However, in this experiment, neither of the Fe-dissolved zeolites shows the maximum value of the outlet oxygen concentration exceeding the inlet oxygen concentration and oxygen selectivity increases consecutively simply with decrease in the adsorption rate of oxygen.

Summarizing the above, the following can be said:

(1) When Fe is dissolved in a Na-A type zeolite the adsorption rate of nitrogen decreases considerably as compared with that of oxygen with increased amount of Fe dissolved and a very high oxygen selectivity is provided under dynamic conditions as in adsorbing columns.

(2) Na-A type zeolite and Fe-dissolved Na-A type zeolite each show increased oxygen selectivity with decreased temperature. This tendency is more remarkable the larger the amount of Fe dissolved is, and complete oxygen selectiveness under dynamic conditions can be achieved in higher temperature regions with Fe-dissolved zeolite than Fe-non-dissolved zeolite.

(3) At an extremely low temperature Fe-dissolved Na-A type zeolite has the adsorption rate of nitrogen which is completely negligible and even decrease in its adsorption rate of oxygen is to such an extent as is detrimental to practical use.

As a result of extensive research we have further found that among the above-described molecular sieves, Na-A type zeolite does not adsorb oxygen selectively at room temperature when it is charged in an adsorbing column and the air is passed therethrough at high pressures but behaves, like the above-described molecular sieves "5A" and "13X", as a nitrogen-selective adsorbent, while Na-A type zeolite having dissolved therein Fe obtained by contacting Na-A type zeolite with iron having a valency of at least 2 in a wet condition and then heating the zeolite at a temperature of about 450°C to dissolve Fe in the crystal of the Na-A type zeolite and further contacting the resulting Fe-dissolved zeolite crystals with an aqueous solution containing K to substitute a portion of Na in the Na-A type zeolite by K (hereafter, Fe-dissolved Na-K-A type zeolite) shows an increased oxygen selectivity and also an increased amount of oxygen adsorbed in a single component system in a clear contrast to the zeolite which is obtained by substituting a portion of Na in pure Na-A type zeolite by K (hereinafter, Na-K-A type zeolite).

Further finding is that the adsorption rate of oxygen is not lowered as the temperature decreases, while nitrogen is not adsorbed at all, thus permitting of removal of oxygen from nitrogen gas of a very high nitrogen concentration.

As far as is known, such behavior of the Fe-dissolved Na-K-A type zeolite in the selective oxygen adsorption has not heretofore been elucidated in the study of adsorption of oxygen and nitrogen.

The above-described Fe-dissolved Na-K-A type zeolite which can be used in this invention was prepared by treatments analogous to those carried out in the case where Fe is dissolved in the above-described Na-A type zeolite. The Fe-dissolved Na-A type zeolite was boiled in an aqueous NaCl solution for 30 minutes to remove exchangeable Fe, washed with water and then immersed in an aqueous KCl solution to substitute a portion of exchangeable Na in the

Na-A type zeolite to obtain Fe-dissolved Na-K-A type zeolite.

In this experiment two kinds of the substituted zeolites, one with a K exchange ratio of 10% and another with that of 20%, were prepared.

For comparison, two kinds of K substituted zeolites, one with a K exchange ratio of 10% and another with that of 20% using Fe-non-dissolved pure Na-A type zeolite as a starting material in the above-described K substitution method.

With respect to the influence of anions on K substitution, no change was observed when $SO_4^{2-}$, $PO_4^{2-}$, $CH_3CO_2^-$, etc. were used instead of $Cl^-$. However, the adsorptivity was lowered considerably without sufficient washing with water when $OH^-$ was used.

Hereinafter, the air separability of the Fe-dissolved Na-K-A type zeolite will be explained with reference to the drawings.

In the same manner as described above, using the testing apparatus shown in Fig. 1, the adsorbing column 6 was charged with (1) Fe-non-dissolved Na-A type zeolite powders, (2) 10% K-substituted form of the sample of (1) above, (3) 20% K-substituted form of the sample of (1) above, (4) 1 wt % Fe-dissolved Na-A type zeolite, (5) 1 wt % Fe-dissolved, 10% K-substituted Na-K-A type zeolite, or (6) 1 wt % Fe-dissolved, 20% K-substituted Na-K-A type zeolite, each in an amount of 15 g and the inlet gas flow rate was set up to 100 N ml/min., and the inlet air pressure to 5.06 bar (5 ata) to measure change in the outlet oxygen concentration with the lapse of time. An example of change in the outlet oxygen concentration with the lapse of time at room temperature is shown in Fig. 6.

In Fig. 6 the horizontal axis X indicates time with its scale being calibrated in minutes, while the vertical axis Y represents oxygen concentration in volume %. In order to indicate the inlet oxygen concentration a standard line α is drawn at an oxygen concentration of 20.8%.

Further, in Fig. 6, curves representing changes in the outlet oxygen concentrations with the lapse of time are expressed by a solid line in the case of (1) Fe-non-dissolved zeolite powders, by a broken line in the case of 10% K-substituted form of the sample of (1) above, and by a dotted broken line in the case of (3) 20% K-substituted form of the sample of (1) above.

The data on change in the outlet oxygen concentration with the lapse of time of the Fe-non-dissolved Na-A type zeolite ① are as analogous to what is explained in Fig. 2 and therefore explanation is eliminated here.

As will be apparent from Fig. 6, even if a portion of Na in the non-Fe-dissolved Na-A type zeolite is substituted by K, no improvement is observed in its adsorptivity. In other words, in Fig. 6, the data of 10% K-substituted form ② show the maximum and minimum values of the outlet oxygen concentration of 32% and 17% respectively, while those of 20% K-substituted form ③ show these values of 22% and 19%, respectively. It should be noted that with 30% K-substituted form adsorption of oxygen and nitrogen no longer occurs.

Consecutively, efficiency of the Fe-dissolved Na-K-A type zeolite according to this invention will be explained with reference to Fig. 7.

Fig. 7, like Fig. 6, shows the change in the outlet oxygen concentration with the lapse of time at room temperature (25°C) with the horizontal and vertical lines as well as the standard line α having the same meanings as those in Fig. 6.

In Fig. 7, the 1 wt % Fe-dissolved Na-A type zeolite shows the minimum value of the outlet oxygen concentration which is lowered to 6% without K-substitution and it is understood that it is improved considerably as compared with the above-described Fe-non-dissolved form. Further, the minimum value of the outlet oxygen concentration of the 1 wt % Fe-dissolved, 10% K-substituted Na-K-A type zeolite ⑤ decreases to 4%, thus showing high oxygen selectivity. With the 1 wt % Fe-dissolved, 20% K-substituted Na-K-A-type zeolite ⑥, the minimum value of the outlet oxygen concentration is elevated to 7% but it should be noted that the outlet oxygen concentration will not exceed an oxygen concentration in the air of 20.8%, i.e., the standard line α, which means substantially no nitrogen is adsorbed and the adsorbent functions as a complete oxygen selective one.

Among the above three kinds of the adsorbents the 1 wt % Fe-dissolved, 10% K-substituted Na-K-A type zeolite was used in the separation of oxygen and nitrogen from the air under the adsorption conditions in lower temperature regions. As a result, a further increase in the efficiency was observed by additional low temperature conditions in addition to the effects attained by the operations at normal temperature. This will be explained with reference to Fig. 8.

In Fig. 8, the data of ⑤ at 25°C are the same as the data of ⑤ in fig. 7. ⑤′ is a curve representing the data obtained in conducting adsorption operation at 0°C and the minimum value of the outlet oxygen concentration increases to 8% but no adsorption of nitrogen occurs with the amount of oxygen adsorbed increasing to 2 times or more. Further, ⑤″ is a curve representing the data obtained in carrying out adsorption operation at −25°C according to which the minimum value of the outlet oxygen concentration is further elevated to 12% although the air separability decreases, with complete oxygen selectiveness being retained satisfactorily.

Summarizing the above, the following can be said:

(1) When Fe is dissolved in an Na-A type zeolite selectivity to oxygen and the like in its adsorption from a two-component system consisting substantially of oxygen and nitrogen, such as air, at normal temperature increases. Substitution of a portion of Na by K in the Fe-dissolved Na-A type zeolite further increases its selectivity and achieves complete oxygen selectiveness under dynamic conditions as in adsorbing columns.

(2) Partial K-substituted form of the Fe-dissolved zeolite does not absorb nitrogen at all over the range of from normal temperature to lower temperature regions. K-Substitution in order to obtain complete oxygen selectiveness must be at high ratios on the higher temperature side, i.e. at temperatures approaching but nevertheless below room temperature (25°C), while on the lower temperature side (i.e. about 0°C and below) K-substitution at low ratios is sufficient.

(3) The reason why the peak value of the outlet oxygen concentration is high (in other words, separation of oxygen from nitrogen is insufficient) on the lower temperature side and at high K-substitution ratio is that mass transfer speed of oxygen onto the adsorbent is too small as compared with space velocity of the air passed. In such case, it is necessary to decrease space velocity of the air in the adsorbing column.

As stated above, the oxygen adsorbent of this invention is quite a new type of oxygen selective adsorbent of which no suggestion whatsoever has been made in the literature and has an advantageous feature that it is capable of adsorbing oxygen in an amount 1.5 to 2 times as large as that adsorbed by the Fe-non-dissolved Na-A type zeolite.

The oxygen adsorbent of this invention can widely be applied to a variety of fields. For example, when it is applied to an oxygen concentration apparatus making use of molecular sieves it is applicable either to temperature swing type or to pressure swing type and can provide an oxygen adsorptivity which is overwhelmingly superior to that of the conventional $N_2$ adsorption type molecular sieves, thereby cutting a path to miniaturization of apparatus used and reduction in the costs for the concentration of oxygen.

Further, it should be noted that under the conditions of flow rate (100 N ml/min.) and pressure 5.06 bar (5 ata) employed in the above described embodiments of this invention, almost complete oxygen selectiveness at 0°C with Fe-dissolved, K-unsubstituted form and at room temperature with 1 wt % Fe-dissolved, 20% K-substituted Na-K-A type zeolite was achieved.

How the outlet oxygen concentration will vary depending upon (1) flow rate, (2) pressure, (3) cross-section of adsorbing column (4) length of the adsorbing column and the like factors under the above-described conditions can be inferred with ease by one skilled in the art from teaching of Kitagawa and Suzuki: "Fundamentals and Design of Adsorption" p. 89—p. 92.

Under the conditions of higher temperature, low ratio of K-substitution, low amount of Fe dissolved, the adsorption rate of nitrogen reaches an innegligible level and analyses similar to the above but directed to two-component system will provide sufficient answers. All these results show that the larger the amount of Fe dissolved, the higher the ratio of K-substitution or the lower the temperature is, the greater is the difference in coefficient of mass transfer between oxygen and nitrogen, which means practically that lower inlet flow rate is allowed in larger amount of Fe dissolved, at higher ratio of K-substitution or at lower temperature, while at a temperature closer to room temperature, at lower ratio of K-substitution or smaller amount of Fe dissolved higher inlet flow rate must be set up.

At any rate, once the data on change in the outlet oxygen concentration with lapse of time as shown in Figs. 2 to 4 and 6 to 8 are obtained design of adsorbing column and of its operation can be made within the knowledge of the conventional art.

Temperature conditions at lower temperature side cannot be selected depending upon the above-described properties of adsorbents alone. For example, in the case where a sufficient amount of waste heat is obtained an absorption refrigerating machine may be used. In this case, a temperature of about −25°C is optional.

When high pressure nitrogen gas after having passed through the absorbing column and a vortex tube are used in combination an optional temperature is about −10°C and when an expansion turbine driven by pressure nitrogen gas after having passed through the adsorbing column a temperature range of −30°C to −50°C is preferred. Thus, the suitable temperature which is to be selected among lower temperatures depends on the manner of cooling rather than the properties of the adsorbent.

Hereinbelow, the process for the selective adsorption and separation of oxygen according to this invention will be explained with reference to a preferred embodiment in which the process is applied to a pressure swing type oxygen producing apparatus.

Fig. 5 shows a schematic illustration of a pressure swing type oxygen producing apparatus. In Fig. 5, reference numerals 17—24 are automatic change-over valves, 25, 26 are adsorbing columns packed with the oxygen adsorbent used in this invention. 27 is a heat exchanger for cooling to low temperature, 28 is an adsorbing column for dehumidifying and removing carbonaceous gas, 29 is a precooler, 30 is an air compressor, 31 is an air strainer and 32 is a throttle valve. Control device and the like for controlling the automatic change-over valves, etc. are not shown.

Now, it is assumed that the adsorbing column 25 is in the step of adsorption and the adsorbing column 26 in the step of regeneration. The air supplied through the air strainer 31 and removed of dusts is pressurized by the air compressor 30 and then predehydrated and cooled to room temperature in the precooler 29. After dehumidifying and removing carbonaceous gas in the adsorbing column 28, the air is further cooled in the heat exchanger for cooling to low temperature 27 to −30°C and is fed via the valve 20 to the adsorbing column 25 in which oxygen in the pressurized air is adsorbed selectively by the adsorbent and the air is enriched with nitrogen. This nitrogen-rich air is fed out of the adsorbing

column 25 through the valve 17. At this moment the valves 17, 20 attached to the adsorbing column 25 are opened and the valves 18, 19 are closed.

On the other hand, the adsorbent in the adsorbing column 26 is regenerated under reduced pressure while adsorption operation is under way in the adsorbing column 25. That is, at that time of the valves 21 to 24 attached to the adsorbing column 26, the valves 21, 22, 24 are closed and the valve 23 is open and the pressure within the adsorbing column 26 is reduced to atmospheric or subatmospheric pressure to desorb a portion of the adsorbate adsorbed during the step of adsorption and the air enriched with oxygen is fed out from the adsorbing column via the valve 23.

As soon as the step of pressure reduction is completed the valve 22 is opened and the air is fed into the adsorbing column 26 via the throttle valves 32 and the valve 22 by means of a ventilating means (not shown) to operate a step of scavenging in which oxygen-rich air-gap gas and the remaining adsorbate in the adsorbing column are brought out via the valve 23.

As soon as the above step is completed the adsorbing column is subjected to the step of adsorption and at the same time the adsorbing column 25 is subjected to the step of regeneration.

As stated above the steps of adsorption and regeneration are repeated continually to take out oxygen-rich air and (or) nitrogen-rich air.

According to the preferred embodiment of this invention an adsorbing column having an inner diameter of 50 mm and a length of 600 mm is packed with 1 kg of 1 wt % Fe-dissolved Na-A type zeolite molded into balls of about 1 mm in diameter using a conventional tablet machine, and adsorption and separation of oxygen is carried out under low temperature conditions of inlet air flow rate of 16 Nl/min. and a temperature of 0°C with the pressure of the air supplied being swung between 1 and 5.06 bar (5 ata).

The product nitrogen concentration and the amount of nitrogen separated downstream of the valves 17, 21 and the product oxygen concentration and the amount of oxygen recovered when the process as shown in Fig. 5 is operated under the above-described conditions are shown in Table 1.

At 25°C no product nitrogen could be obtained downstream of the valves 17, 21 and 45% of oxygen passed in the case where pure Na-A type zeolite is used. This is considered to be ascribable to the fact that a slight decrease in the oxygen concentration in the initial stage of adsorption observed in the small air separation testing apparatus shown in Fig. 1 is set off by nitrogen adsorption which followed. Therefore, higher inlet flow speed is necessary at about 25°C.

TABLE 1

| | |
|---|---|
| Shape of Adsorbing Column: | 50 mm in inner diameter and 600 mm in length |
| Amount of Adsorbent Charged: | 1kg |
| Pressure swing: | 1.01 to 5.06 bar (1 to 5 ata) |
| Inlet Air Flow Rate: | 16 Nl/min. |
| Cycle Time: | 5 min. |
| Temperature of Adsorbing Column: | 0°C |
| Product $N_2$ Concentration: | 99% |
| Product $N_2$ Recovery: | 40 l/cycle |
| Product $O_2$ Concentration: | 82% |
| Product $O_2$ Recovery: | 11 l/cycle |

Further, the same adsorption separation test as above except that the inlet air flow rate was set up to 2.8 Nl/min. the temperature was at room temperature (25°C) was repeated using 1 wt % Fe-dissolved 20% K-substituted Na-K-A type zeolite and the data obtained are shown in Table 2.

TABLE 2

| | |
|---|---|
| Shape of Adsorbing Column: | 50 mm in inner diameter and 600 mm in length |
| Amount of Adsorbent Charged: | 1 kg |
| Pressure Swing: | 1.01 to 5.06 bar (1 to 5 ata) |
| Inlet Air Flow Rate: | 28 Nl/min. |
| Cycle Time: | 5 min. |
| Temperature of Adsorbing Column: | 25°C |
| Product $N_2$ Concentration: | 96% |
| Product $N_2$ Recovery: | 13 l/cycle |
| Product $O_2$ Concentration: | 68% |
| Product $O_2$ Recovery: | 5 l/cycle |

**Claims**

1. An adsorbent for adsorbing oxygen from a mixed gas consisting substantially of oxygen and nitrogen which comprises a Na-A type zeolite having iron dissolved therein, characterised in that the zeolite contains at least 0.5% by weight of iron having a valency state of at least 2 but contains no more than 0.1% by weight of impurities.

2. An adsorbent as claimed in Claim 1, characterised in that a part of the Na of said zeolite is substituted by K.

3. A process for the separation of a mixed gas consisting substantially of oxygen and nitrogen into oxygen and nitrogen which comprises passing said gas through a layer of an oxygen adsorbent at a temperature below room temperature and adsorbing oxygen selectively with said adsorbent, characterised in that the adsorbent is as claimed in Claim 1 or 2.

4. A process as claimed in Claim 3, characterised in that nitrogen gas passing through the adsorbent is collected and adsorbed oxygen is recovered from the adsorbent by reducing the pressure in the layer of adsorbent to a pressure below that at which adsorption is carried out, the recovered oxygen being collected.

5. A process as claimed in Claim 3 or 4 characterised in that the adsorption is carried out at super-atmospheric pressure.

**Revendications**

1. Un adsorbant pour adsorber l'oxygène d'un mélange gazeux composé essentiellement d'oxygène et d'azote, cet adsorbant comprenant une zéolite de type Na-A contenant du fer dissous et étant caractérisé par le fait que la zéolite contient au moins 0,5% en poids de fer ayant un état de valence d'au moins 2 mais ne contient pas plus de 0,1% en poids d'impuretés.

2. Un adsorbant selon la revendication 1, caractérisé par le fait qu'une partie du sodium (Na) de la zéolite est substitué par du potassium (K).

3. Un procédé pour la séparation d'un mélange gazeux, composé essentiellement d'oxygène et d'azote, en oxygène et azote, ce procédé comprenant le passage du mélange gazeux à travers une couche d'un adsorbant d'oxygène à une température inférieure à la température ambiante et l'adsorbtion sélective de l'oxygène par cet adsorbant, ce procédé étant caractérisé par le fait que l'adsorbant est celui revendiqué à la revendication 1 ou 2.

4. Un procédé selon la revendication 3, caractérisé par le fait que l'azote passant à travers l'adsorbant est recueilli et que l'oxygène adsorbé est récupéré à partir de l'adsorbant en réduisant la pression dans la couche d'adsorbant à une pression inférieure à celle à laquelle avait été effectuée l'adsorption, l'oxygène ainsi récupéré étant recueilli.

5. Un procédé selon la revendication 3 ou 4, caractérisé par le fait que l'adsorption est conduite à une pression supérieure à la pression atmosphérique.

**Patentansprüche**

1. Sauerstoff-Adsorbent aus einem Gasgemisch, das im wesentlichen aus Sauerstoff und Stickstoff besteht, und das einen Zeolith vom Na-A-Typus mit gelöstem Eisen enthält, dadurch gekennzeichnet, daß der Zeolith wenigstens 0,5 Gewichts-Prozente Eisen mit einer Wertigkeit von wenigstens 2 enthält, jedoch nicht mehr als 0,1 Gewichts-Prozente Verunreinigung.

2. Adsorbent nach Anspruch 1, dadurch gekennzeichnet, daß ein Teil des Na des genannten Zeolithen durch K ersetzt ist.

3. Verfahren zum Zerlegen eines Gasgemisches, das im wesentlichen aus Sauerstoff und Stickstoff besteht, in Sauerstoff und Stickstoff, wobei das Gas durch eine Schicht eines Sauerstoff-Adsorbenten bei einer Temperatur von weniger als Raumtemperatur hindurchgeleitet und der Sauerstoff selektiv mittels des Adsorbenten adsorbiert wird, dadurch gekennzeichnet, daß ein in Anspruch 1 oder Anspruch 2 angegebener Adsorbent verwendet wird.

4. Verfahren nach Anspruch 3, dadurch gekennzeichnet, daß das durch den Adsorbenten

hindurchtretende Stickstoffgas gesammelt wird, und daß adsorbierter Sauerstoff aus dem Adsorbenten dadurch wiedergewonnen wird, daß der Druck in der Schicht des Adsorbenten auf einen Wert abgesenkt wird, unterhalb welchem



die Adsorption ausgeführt wird, wobei der wiedergewonnene Sauerstoff gesammelt wird.

5. Verfahren nach Anspruch 3 oder 4, dadurch gekennzeichnet, daß die Adsorption bei überatmosphärischem Druck durchgeführt wird.

FIG. 1

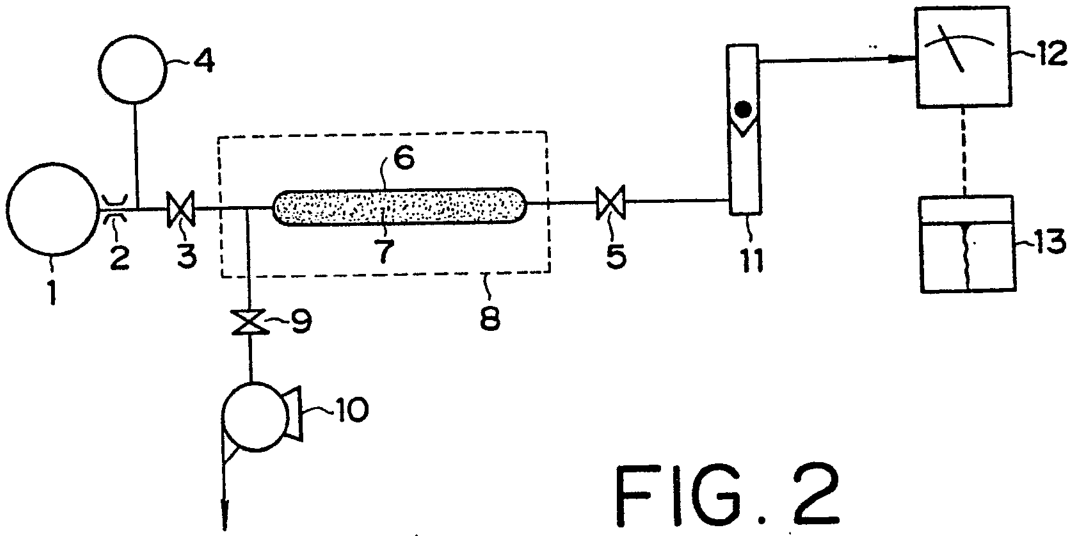
1
2
3
4
5
6
7
8
9
10
11
12
13

FIG. 2

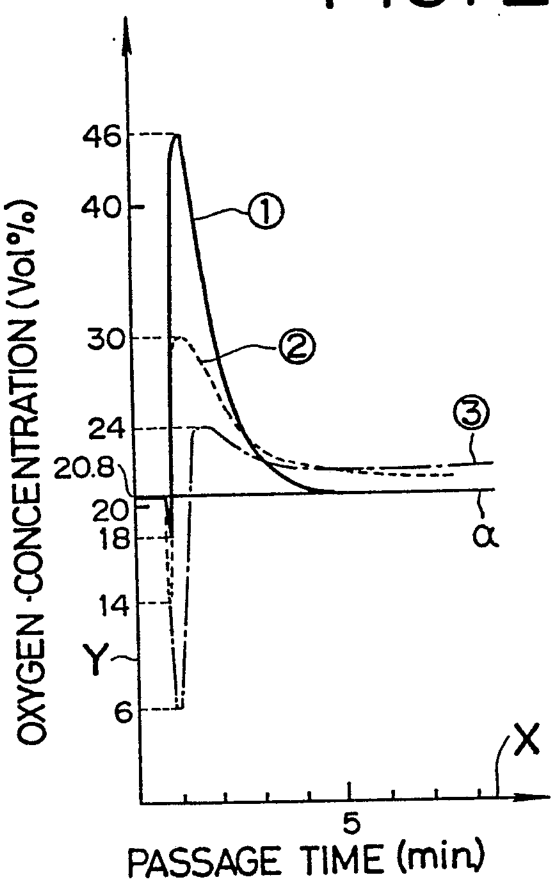
OXYGEN ·CONCENTRATION (Vol%)
46
40
30
24
20.8
20
18
14
Y
6
①
②
③
α
X
5
PASSAGE TIME (min)

FIG. 3

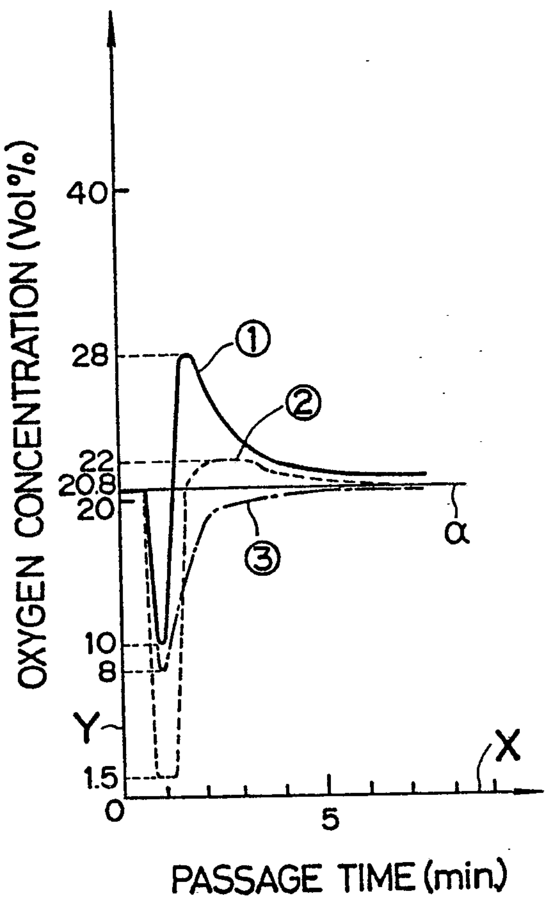
OXYGEN CONCENTRATION (Vol%)
40
28
22
20.8
20
10
8
1.5
Y
0
5
X
①
②
③
α
PASSAGE TIME (min)

FIG. 4

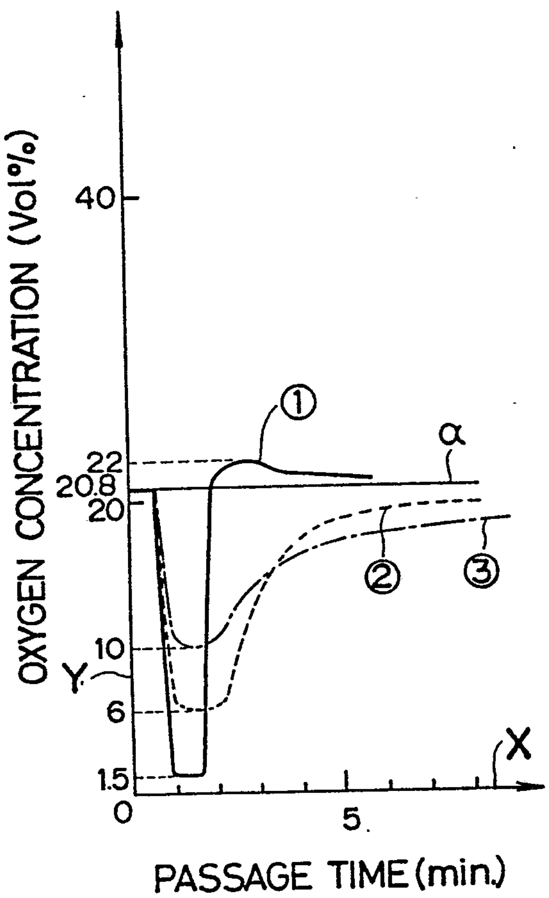
OXYGEN CONCENTRATION (Vol%)
40
22
20.8
20
10
6
1.5
Y
0
5
X
①
②
③
α
PASSAGE TIME (min)

FIG. 5

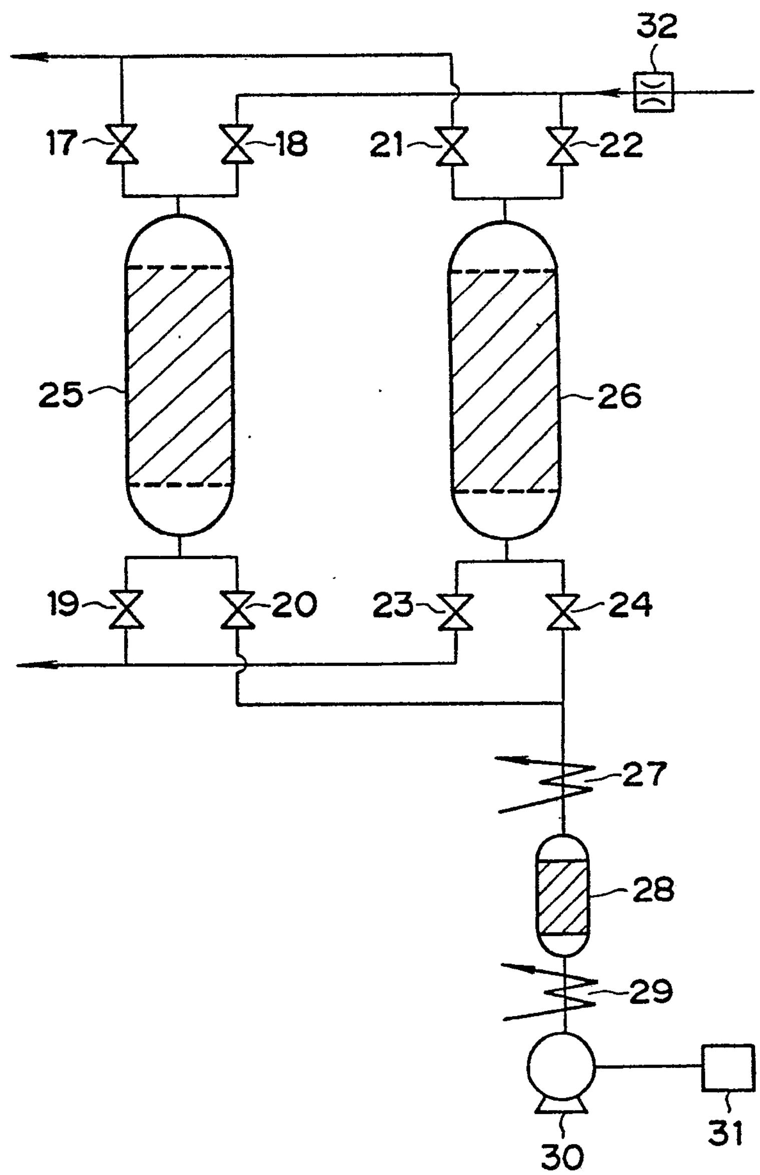

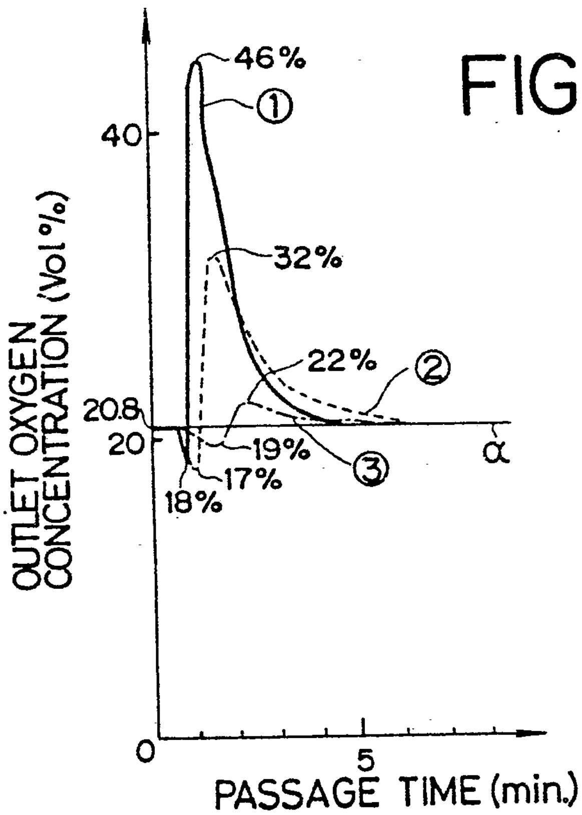


FIG. 6

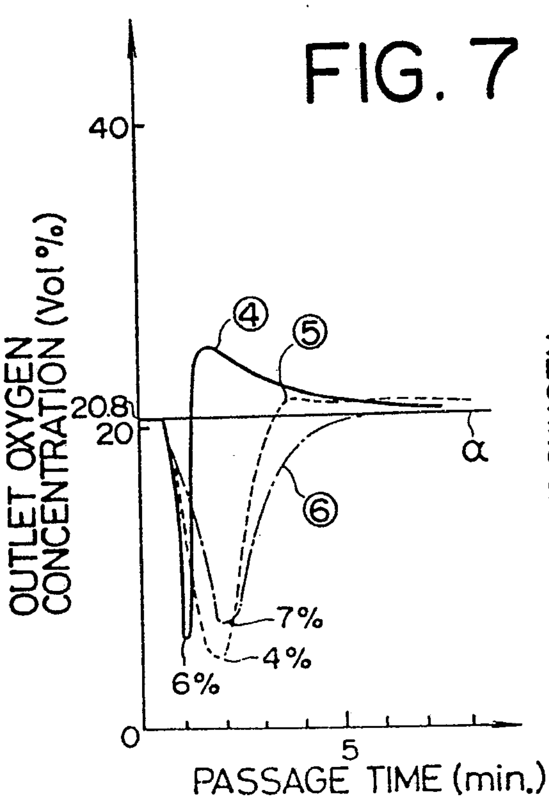


FIG. 7

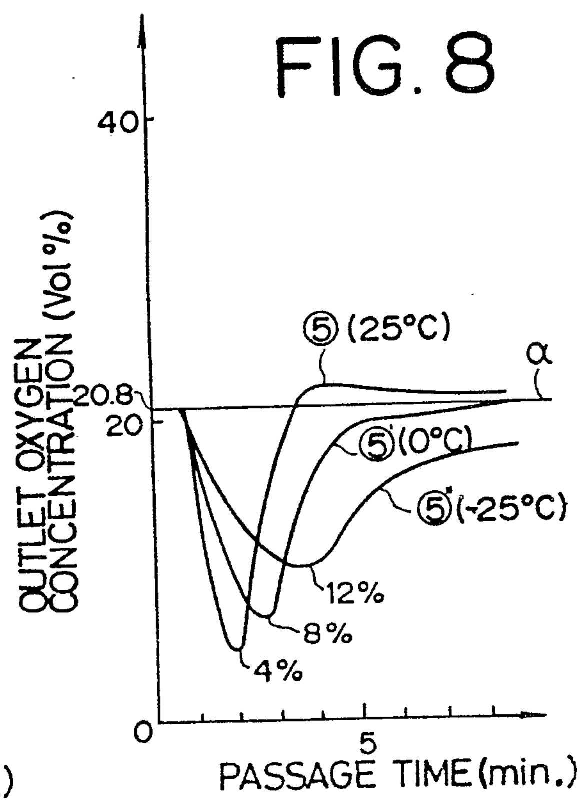


FIG. 8